**Europäisches Patentamt**

**European Patent Office**

**Office européen des brevets**

(11) Veröffentlichungsnummer: **0 263 189 B1**

(12) **EUROPÄISCHE PATENTSCHRIFT**

(45) Veröffentlichungstag der Patentschrift:
**12.04.89**

(51) Int. Cl.⁴: **B60N 1/00**

(21) Anmeldenummer: **86113514.3**

(22) Anmeldetag: **01.10.86**

(54) **Doppel-Fahrgastsitz.**

(43) Veröffentlichungstag der Anmeldung:
**13.04.88 Patentblatt 88/15**

(45) Bekanntmachung des Hinweises auf die Patenterteilung:
**12.04.89 Patentblatt 89/15**

(84) Benannte Vertragsstaaten:
**BE DE ES FR GB IT NL SE**

(56) Entgegenhaltungen:
**DE-A- 3 022 640**
**DE-A- 3 147 045**
**US-A- 4 109 959**

(73) Patentinhaber: **Ignaz Vogel GmbH & Co KG,
Fahrzeugsitze, Kleinsteinbacher Strasse 42-44,
D-7500 Karlsruhe 41-Stu(DE)**

(72) Erfinder: **Vogel, Ignaz, Dipl.-Ing., Kleinsteinbacher
Strasse 44, D-7500 Karlsruhe 41-Stu(DE)**

(74) Vertreter: **Trappenberg, Hans, Postfach 1909,
D-7500 Karlsruhe 1(DE)**

## Beschreibung

Die Erfindung betrifft einen Doppel-Fahrgastsitz zum Einbau in Land-, Wasser- und Luftfahrzeuge, gebildet aus einem Sitzuntergestell mit Stützfüßen, auf denen zwei Sitzteile und jeweils mit ihnen starr oder verschwenkbar verbundene Rückenteile angebracht sind, wobei das Sitzuntergestell aus den Stützfüßen besteht, auf denen ein aus zwei mit Abstand voneinander angeordneten Profilstäben gebildeter Querbügel befestigt ist und auf den Profilstäben zwei Montageplatten für die Sitzteile mit Rückenteilen angebracht sind.

Fahrgastsitze müssen, über die Bedingungen für normale Sitzmöbel wie Sitzkomfort und ansprechendes Äußere hinaus, auch "betriebssicher" sein. Dies heißt, daß diese Fahrgastsitze, die ja wesentlich härteren Beanspruchungen als normale Sitzmöbel ausgesetzt sind, äußerst stabil sein müssen, daß sie trotzdem in der Lage sein müssen, Aufprallenergie splitterfrei nachgebend aufzunehmen, daß sie auch nach langen Betriebszeiten noch klapperfrei sein müssen und daß sie trotz allem nur ein geringes Gewicht aufweisen dürfen. Eine weitere wichtige Forderung ist die der wirtschaftlichen Herstellbarkeit der Fahrgastsitze, wie auch deren wirtschaftlicher Betrieb durch die Möglichkeit der Auswechslung von Verschleißteilen. Auch sollen diese Fahrgastsitze in den betreffenden Fahrzeugen einfach zu montieren und den dortigen beziehungsweise den gewünschten Platzverhältnissen anzupassen sein. Eine weitere Forderung, die aus dem Zwang zur Wirtschaftlichkeit und damit zur Herstellung großer Stückzahlen resultiert, ist, daß die Fahrzeugsitze ein möglichst geringes Versandvolumen aufweisen sollen, daß sie also weitestgehend in Einzelteile zerlegt zu versenden sind.

Weitgehend diesen Forderungen entspricht eine Konstruktion nach der DE-A 3 022 640, die ein Sitzuntergestell, bestehend aus den beiden Stützfüßen, einem verbindenden Querbügel sowie auf dem Querbügel angebrachten Montageplatten beschreibt, wobei auf diesen Montageplatten dann die Sitzteile mit Rückenteilen zu befestigen sind. Ein derart aufgebauter Sitz weist eine genügende Festigkeit auf, gibt jedoch dann splitterfrei nach, wenn beispielsweise aufprallende Personen aufzufangen sind, ist einfach und damit wirtschaftlich herstellbar, ist in Einzelteile zerlegt versendbar und weist auch nur ein geringes Gewicht auf. Die Erfindung betrifft die Verbesserung dieser Konstruktion.

Die gewünschte Verbesserung, und zwar hinsichtlich Gewicht, Herstellbarkeit und Festigkeit, ergibt sich nach der Erfindung dadurch, daß die Profilstäbe des Sitzuntergestells jeweils flachliegende Rechteck-Kastenholme sind, gebildet aus einem Strangpreßteil, das zwei Teil-Kastenholme aufweist, die jeweils unter- beziehungsweise oberseitig mit im Querschnitt C-förmigen Verbindungsschienen verbunden sind und daß die Montageplatten aus hochkant stehenden Vierkantrohren zusammengefügte Rahmenvierecke sind.

Nicht mehr also wie bei der bekannten Konstruktion dienen als Querbügel Profilstäbe, die aus zwei übereinander angeordneten C-förmigen Verbindungsschienen gebildet sind, sondern flachliegende Rechteck-Kastenholme, die durch ihre besondere Form geeignet sind, sehr hohe Kräfte und Drehmomente aufzunehmen. Auf diese Kastenholme werden sodann die Montageplatten aufgebracht, die ebenfalls durch ihre besondere Form und Anordnung, nämlich die hochkant stehenden, zu einem Rahmenviereck zusammengefügten Rechteckrohre, äußerst steif sind. Insgesamt ergibt sich damit ein Untergestell, das eine sehr hohe Festigkeit aufweist, obwohl zu dessen Aufbau weniger Material verwendet werden muß, als bei der bekannten Konstruktion. Damit mindert sich nicht nur das Gewicht eines derart aufgebauten Doppel-Fahrgastsitzes, sondern es ergibt sich damit auch eine einfache und damit kostensparende Herstellmöglichkeit. Die flachliegenden Kastenholme haben zudem den Vorteil, daß eine zusätzliche Unterkonstruktion zum Befestigen der Stützfüße nicht notwendig ist beziehungsweise die Stützfüße nicht ebenso breit sein müssen, wie die Montageplatten beziehungsweise die Sitzteile. An diese Profilstäbe können unschwer alle erforderlichen Sitz-Zusatzteile wie beispielsweise unterseitig Fußstützen und Beinauflagen und oberseitig Abfallbehälter, Schwenktische, separate Armstützen, Mittelarmlehnen und Blenden etc. angebracht werden, ohne daß es hierzu weiterer Hilfsmittel bedarf. All diese Zusatzteile können, und dies ist der ganz besondere Vorteil, auch nachträglich angebracht werden. Ebenfalls ist es möglich, auch die Wandbefestigung verschiebbar auf der Unterseite der Profilstäbe anzubringen.

Der Minderung des Gewichtes dienlich ist auch, daß die Strangpreßteile nach der Erfindung aus Hartaluminium sind.

Dem Gesichtspunkt der Wirtschaftlichkeit wird auch dadurch Rechnung getragen, daß zur Verbindung der Fußstützen und der Montageplatten mit den Profilstäben in den C-förmigen Verbindungsschienen verschiebbare Nutenschrauben vorgesehen sind, die deutlich einfacher zu montieren sind, als in diesen Verbindungsschienen verschiebbar angeordnete Gewindesteine.

Um bei quer verschiebbaren Fahrgastsitzen und unterschiedlichen Sitzbreiten stets gleichlange Verstellschienen verwenden zu können, sind außerdem in den Rahmenvierecken mit in Richtung der Profilstäbe beziehungsweise Verstellschienen mit Befestigungslöchern versehene Eckbleche angebracht.

Zu beachten ist auch, daß mit der Konstruktion nach der Erfindung nicht nur Doppel-Fahrgastsitze aufgebaut werden können, sondern auch Mehrfachsitze, wie sie beispielsweise an der Rückwand von Autobussen oder bei der Bestuhlung anderer Verkehrsmittel, beispielsweise Schiffe, notwendig sind. Ebenfalls ist es selbstverständlich möglich, auch einzelne Fahrgastsitze mit diesen Konstruktionsmerkmalen zu erstellen.

Auf der Zeichnung ist der Erfindungsgegenstand schematisch dargestellt, und zwar zeigen:

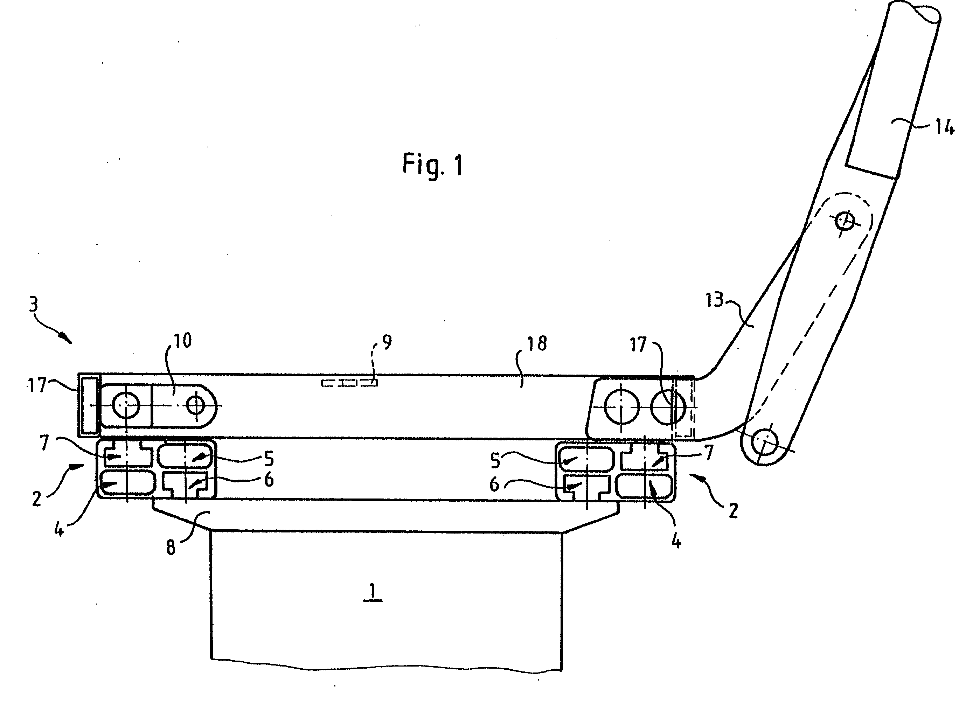

Fig. 1 eine Seitenansicht und
Fig. 2 eine Draufsicht auf das Sitzuntergestell.

Das erfindungsgemäße Sitzuntergestell ist gebildet aus Stützfüßen 1, die Stützfüße 1 überbrückende Profilstäbe 2 sowie als Rahmenvierecke 3 ausgebildete Montageplatten. Die Profilstäbe 2 bestehen aus einem flachliegenden Kastenholm mit zwei Teil-Kastenholmen 4, 5 und zwei mit diesen Teil-Kastenholmen verbundenen, im Querschnitt C-förmigen Verbindungsschienen 6, 7. Unterseitig ist an diese Profilstäbe 2 über eine Traverse 8 ein Stützfuß 1 angeschraubt. Hierzu sind Nutenschrauben (der Übersichtlichkeit halber nicht eingezeichnet) in die Verbindungsschienen 6 verschiebbar eingefügt, so daß die Stützfüße insgesamt verschiebbar an der Unterseite des Sitzuntergestells anzubringen sind. In gleich verschiebbarer Art und Weise ist auch die Montageplatte auf der Oberseite der Profilstäbe angebracht, mit in die Verbindungsschienen 7 eingreifenden Nutenschrauben. Die Montageplatte besteht hierbei aus hochkant gestellten Vierkantrohren 17, 18, wodurch sich zusammen mit der Traverse 8 eine sehr steife Verbindung der Profilstäbe 2 miteinander ergibt. Insgesamt ist dadurch dieses Sitzgestell trotz äußerst geringen Materialaufwandes äußerst steif und in der Lage, auch sehr hohe Kräfte aufzunehmen. An der Montageplatte können nun den jeweiligen Verhältnissen entsprechende Befestigungslaschen etc. angebracht werden, also beispielsweise Laschen 9 für Polsterteile, Z-Laschen 10 zum Anbringen einer Gasfeder, Befestigungen 11 zum Anbringen einer Blende, Lagerböcke 12 zum Lagern eines Verstellmechanismuses zum Feststellen der Längsbewegung derartiger Fahrgastsitze und schließlich auch Streben 13 zum Anlenken der Rückenteile 14. Um auch Forderungen hinsichtlich des Anbringens von Sicherheitsgurten zu genügen, kann zusätzlich eine über die Profilstäbe 2 reichende Schiene 15 mit einem Gurtbefestigungspunkt 16 vorgesehen sein.

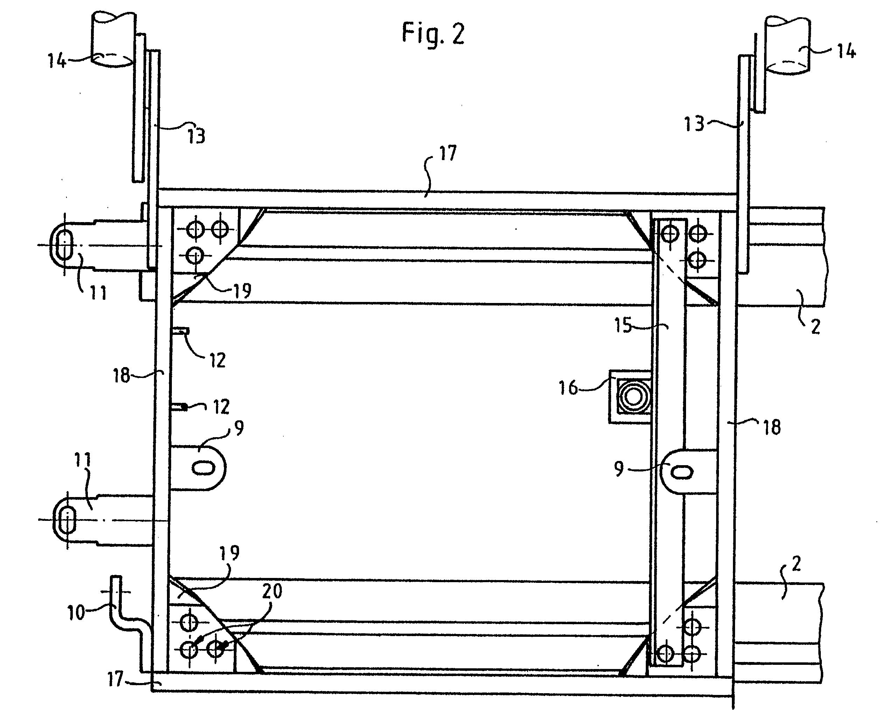

Wie aus Fig. 2 zu ersehen ist, bilden die hochkant stehenden Vierkantrohre 17, 18 zusammen ein Rahmenviereck 3, das durch Eckbleche 19 noch zusätzlich versteift ist. In diesen Eckblechen 19 sind in Richtung der Profilstäbe 2 liegende Befestigungslöcher 20 vorgesehen, die zum Befestigen des Rahmenvierecks 3 direkt auf den Profilstäben 2 oder auch auf einer Verstellschiene dienen. Um auch bei unterschiedlichen Sitzbreiten die gleiche Verstellschiene verwenden zu können, können hierbei die Nutenschrauben in entsprechende Befestigungslöcher 20 eingefügt werden.

## Patentansprüche

1. Doppel-Fahrgastsitz zum Einbau in Land-, Wasser- und Luftfahrzeuge, gebildet aus einem Sitzuntergestell mit Stützfüßen (1), auf denen zwei Sitzteile und jeweils mit ihnen starr oder verschwenkbar verbundene Rückenteile (14) angebracht sind, wobei das Sitzuntergestell aus den Stützfüßen besteht, auf denen ein aus zwei mit Abstand voneinander angeordneten Profilstäben (2) gebildeter Querbügel befestigt ist und auf den Profilstäben zwei Montageplatten (3) für die Sitzteile mit Rückenteilen angebracht sind, dadurch gekennzeichnet, daß die Profilstäbe (2) jeweils flachliegende Rechteck-Kastenholme sind, gebildet aus einem Strangpreßteil, das zwei Teil-Kastenholme (4, 5) aufweist, die jeweils unter- beziehungsweise oberseitig mit im Querschnitt C-förmigen Verbindungsschienen (6, 7) verbunden sind und daß die Montageplatten (3) aus hochkant stehenden Vierkantrohren (17, 18) zusammengefügte Rahmenvierecke (3) sind.

2. Doppel-Fahrgastsitz nach Anspruch 1, dadurch gekennzeichnet, daß die Strangpreßteile aus Hartaluminium sind.

3. Doppel-Fahrgastsitz nach Anspruch 1, dadurch gekennzeichnet, daß zur Verbindung der Stützfüße (1) und der Montageplatten (3) mit den Profilstäben (2) in den C-förmigen Verbindungsschienen (6, 7) verschiebbare Nutenschrauben vorgesehen sind.

4. Doppel-Fahrgastsitz nach Anspruch 1, dadurch gekennzeichnet, daß in den Rahmenvierecken (3) mit in Richtung der Profilstäbe (2) mit Befestigungslöchern (20) versehene Eckbleche (19) angebracht sind.

## Claims

1. A double passenger seat for installation in air, land and water vehicles, formed from a seat substructure with support legs (1), on which are mounted two seat portions and respective back portions (14) which are rigidly or pivotally connected thereto, wherein the seat substructure comprises the support legs on which is fixed a transverse frame means formed from two spaced-apart shaped bars (2), and mounted on the shaped bars are two mounting plates (3) for the seat portions with back portions, characterized in that the shaped bars (2) are respectively rectangular box spars disposed in a lying-flat condition, formed from an extruded member which has two partial box spars (4, 5) which are connected at the underside and the top side respectively to connecting rails (6, 7) which are of C-shaped cross-section and that the mounting plates (3) are frame quadrilaterals (3) assembled from on-edge quadrangular tubes (17, 18).

2. A double passenger seat according to claim 1 characterized in that the extruded members are of hard aluminium.

3. A double passenger seat according to claim 1 characterized in that for the purposes of connecting the support legs (1) and the mounting plates (3) to the shaped bars (2) there are provided groove-type screws which are displaceable in the C-shaped connecting rails (6, 7).

4. A double passenger seat according to claim 1, characterized in that mounted in the frame quadrilaterals (3) are corner plates (19) provided with fixing holes (20), in the direction of the shaped bars (2).

## Revendications

1. Siège double pour passagers destiné à être monté dans un véhicule terrestre, aérien ou maritime, constitué par un châssis de siège comprenant des pieds d'appui (1) sur lesquels sont montées deux assises et, pour chacune d'elles, un dossier (14) qui lui est relié de manière rigide ou articulée, le châssis de siège se composant des pieds d'appui sur lesquels est fixée une traverse formée par deux barres profilées (2) disposées à distance l'une de l'autre, et deux plaques de montage (3) étant montées sur les barres profilées pour les assises et leurs dossiers, caractérisé par le fait que chaque barre profilée (2) est un longeron en caisson à section rectangulaire posé à plat et constitué par une pièce extrudée qui comporte deux longerons en caisson élémentaires (4, 5) dont la face inférieure ou, respectivement, supérieure, est à chaque fois reliée à un rail de liaison à section transversale en forme de C (6, 7), et par le fait que les plaques de montage (3) sont des cadres rectangulaires (3) composés de tubes à section rectangulaire (17, 18) posés de chant.

2. Siège double pour passagers selon la revendication 1, caractérisé par le fait que les pièces extrudées sont en aluminium dur.

3. Siège double pour passagers selon la revendication 1, caractérisé par le fait que des vis à fente pouvant être déplacées dans les rails de liaison en forme de C (6, 7) sont prévues pour relier les pieds d'appui (1) et les plaques de montage (3) aux barres profilées (2).

4. Siège double pour passagers selon la revendication 1, caractérisé par le fait que des coins en tôle (19) munis de trous de fixation (20) dans la direction des barres profilées (2) sont montés dans les cadres rectangulaires (3).

Fig. 1

EP 0 263 189 B1

Fig. 2